# FASCICULE DE BREVET EUROPEEN

(11) **EP 1 732 668 B1**
(45) Date de publication et mention de la délivrance du brevet: **16.07.2008**
(21) Numéro de dépôt: 05717024.3
(22) Date de dépôt: 14.03.2005
(51) Int. Cl.: B01D 53/64

(54) **PROCEDE D'ABATTEMENT DE METAUX LOURDS DES GAZ DE FUMEES**
VERFAHREN ZUR VERRINGERUNG DES SCHWERMETALLGEHALTS VON RAUCHGASEN
METHOD FOR REDUCING HEAVY METALS OF FLUE GASES

(30) Priorité: 15.03.2004 BE 200400136
(43) Date de publication de la demande: 20.12.2006
(73) Titulaire: S.A. LHOIST RECHERCHE ET DEVELOPPEMENT, 1342 Ottignies-Louvain-La-Neuve (BE)
(72) Inventeur: GAMBIN, Amandine, F-70270 Ternuay (FR); LAUDET, Alain, B-5000 Namur (BE)
(74) Mandataire: Claeys, Pierre
(86) Numéro de dépôt international: PCT/EP2005/051141
(87) Numéro de publication internationale: WO 2005/099872

(56) Documents cités:
- WO-A-02/076577
- ES-A1- 2 136 496
- DATABASE CA [Online] CHEMICAL ABSTRACTS SERVICE, COLUMBUS, OHIO, US; XP002303805 extrait de STN Database accession no. 115:34760 & CHEMICAL ABSTRACTS, vol. 115, no. 4, 29 juillet 1991 (1991-07-29), Columbus, Ohio, US; abstract no.: 34760, DAZA, L.;MENDIOROZ,S; PAJARES, J.A.: "mercury adsorption by sulfurized fibrous silicates"
- DATABASE CA [Online] CHEMICAL ABSTRACTS SERVICE, COLUMBUS, OHIO, US; XP002303806 extrait de STN Database accession no. 114:30609 & CHEMICAL ABSTRACTS, vol. 114, no. 4, 28 janvier 1991 (1991-01-28), Columbus, Ohio, US; abstract no.: 30609, DAZA, L; MENDIOROZ,S;PAJARES,J: "Role of the structure and texture of palygorskite supported sulfur in mercury chemisorption"

## Description

La présente invention se rapporte à un procédé d'abattement de métaux lourds, en particulier de mercure, présents dans les gaz de fumées comprenant une étape de mise en contact des gaz de fumées avec une matière solide de sorption à l'état sec.

Par les termes "métaux lourds" on entend les composés chimiques suivants cités ici à des fins illustratives uniquement: le francium, le radium, les lanthanides, les actinides, le zirconium, le Hafnium, le rutherfordium, le vanadium, le niobium, le tantale, le dubnium, le chrome, le molybdène, le tungstène, le manganèse, le téchnétium, le rhénium, le fer, le ruthénium, l'osmium, le cobalt, le rhodium, l'iridium, le nickel, le palladium, le platine, le cuivre, l'argent, l'or, le zinc, le cadmium, le mercure, le gallium, l'indium, le thallium, le germanium, l'étain, le plomb, l'arsenic, l'antimoine, le bismuth, le polonium. Le procédé d'abattement selon l'invention concerne principalement les métaux lourds les plus courants, à savoir le plomb, le chrome, le cuivre, le Mn, l'antimoine, l'arsenic, le cobalt, le nickel, le vanadium, le cadmium, le thallium et le mercure, de préférence le plomb, le thallium, le cadmium, et le mercure, en particulier, le mercure.

L'abattement de métaux lourds, en particulier de mercure, présents dans les gaz de fumées est généralement dans l'état de la technique opéré au moyen de composés carbonés, tels les charbons actifs ou le coke de lignite. Ils peuvent être mis en oeuvre soit tels quels, soit en mélange avec un absorbant basique, en lit fixe sous forme granulaire ou par injection dans le gaz sous forme pulvérulente ; les particules solides sont alors piégées en aval, par exemple dans un filtre textile, où leur action est prolongée.

L'efficacité des composés carbonés pour capter ces métaux est unanimement reconnue. Néanmoins, l'emploi de ces composés carbonés dans les gaz de fumées présente deux inconvénients majeurs :
- l'augmentation de la teneur en carbone dans les poussières issues de la filtration de ces fumées, teneur en carbone qui est sévèrement réglementée ;
- le risque d'inflammabilité, d'autant plus important que la température des gaz à épurer est élevée.

Une amélioration apportée par l'homme du métier pour résoudre les problèmes d'ignition des composés carbonés a été de les utiliser en mélange avec des retardateurs d'inflammabilité, tels que la chaux. Malheureusement, cette amélioration a effectivement réduit les problèmes d'ignition des composés carbonés mais ne les a pas complètement résolus. En effet, des points chauds peuvent encore apparaître même à des basses températures (par exemple 150 °C), notamment en présence d'infiltration d'air dans des zones où les composés carbonés font l'objet d'accumulation. Les composés carbonés sont en outre des composés coûteux et l'étape mettant en oeuvre lesdits composés carbonés s'intègre difficilement dans un procédé complet de traitement des gaz de fumées. En effet, de nos jours, un procédé complet, de par les nouvelles normes de plus en plus strictes, doit souvent éliminer aussi les produits azotés des gaz de fumées. L'élimination des oxydes d'azote par voie catalytique est généralement pratiquée à une température de gaz plus élevée (> 200 °C). Pour une compatibilité sécurisée avec une étape de procédé utilisant les composés carbonés, il faut alterner refroidissement des gaz de fumées et chauffage de ces derniers. Ceci représente un manque à gagner économique, de temps et une perte énergétique importante. II est donc difficile d'intégrer les composés carbonés dans un procédé de traitement de fumées étant donné les problèmes d'ignition que ces composés provoquent.

Les documents "ES 8704428", et "GIL, M. ISABEL; ECHEVERRIA, SAGRARIO MENDIOROZ; MARTIN-LAZARO, PEDRO JUAN BERMEJO; ANDRES, VICENTA MUNOZ, Mercury removal from gaseous streams. Effects of adsorbent geometry, Revista de la Real Academia de Ciencias Exactas, Fisicas y Naturales (Espana) (1996), 90(3), pp. 197-204" révèlent qu'il est possible de s'affranchir du carbone pour l'abattement des métaux lourds, en particulier du mercure, par l'utilisation de soufre comme réactif. Le soufre est déposé sur un support minéral, tels des silicates naturels. De telles formulations pallient ainsi les inconvénients précités des phases carbonées. Dans ce cas, le silicate est considéré comme un support inerte par rapport au polluant à capter ; ce dernier est piégé par réaction avec le composé soufré pour former en général un sulfure.

ES-A-2 136 496 décrit un procédé de sulfuration de silicates naturels pour retenir les vapeurs de métaux.

Malheureusement, les silicates fonctionnalisés par des composés soufrés font l'objet d'une fabrication dangereuse, lourde et coûteuse qui pénalise son utilisation. Par exemple, le document ES 8704428 divulgue une sulfurisation d'un silicate par une réaction d'oxydation de sulfure d'hydrogène (H₂S) à une proportion molaire bien définie dans le but d'adsorber du soufre élémentaire sur ledit silicate. La manipulation de sulfure d'hydrogène (H₂S) toxique est une manipulation dangereuse et la proportion molaire stricte nécessaire pour éviter toute réaction d'oxydation ultérieure est très contraignante.

L'invention a pour but de remédier à ces inconvénients en procurant un procédé d'abattement de métaux lourds, en particulier de mercure présents dans les gaz de fumées utilisant un composé de sorption dont la mise en oeuvre est simplifiée, moins dangereuse et peu coûteuse.

A cette fin, le procédé selon l'invention est caractérisé en ce que la matière solide de sorption est un composé minéral non fonctionnalisé choisi dans le groupe constitué de l'halloysite et des phyllosilicates du sous-groupe des "palygorskite-sépiolite" selon la classification de Dana.

Dès lors, la mise en oeuvre du composé de sorption ne nécessite que l'obtention d'un produit usuel, bon marché qui soit sec.

De plus, le procédé comprend aussi une mise en contact, à l'état sec, réalisée à une température comprise dans la plage allant de 70°C à 350°C, de préférence entre 120°C et 250°C. La possibilité d'opérer à des températures supérieures à 200°C pour la mise en contact permet de maintenir une température relativement constante tout au long du procédé de traitement des gaz de fumée et d'éviter les étapes de refroidissement et de chauffage consécutives pour l'élimination des métaux lourds puis, celle des composés azotés par catalyse.

Le procédé selon l'invention est un procédé d'abattement de métaux lourds, en particulier de mercure, dans les gaz de fumées à intégrer de préférence dans un traitement complet de gaz de fumées. En effet, le procédé selon l'invention comprend une étape d'élimination des polluants acides majoritaires par mise en contact desdits gaz de fumées avec des absorbants basiques. D'une manière générale, les polluants acides majoritaires dans les gaz de fumées comprennent les acides chlorhydrique, fluorhydrique, les oxydes de soufre ou encore les oxydes d'azotes, leurs teneurs à l'émission dans les gaz de fumées avant traitement sont de l'ordre de plusieurs dizaines à plusieurs centaines de mg/Nm³

Dans le procédé, lesdits absorbants basiques, par exemple, la chaux ou le carbonate de calcium, et ledit composé minéral non fonctionnalisé choisi dans le groupe constitué de l'halloysite et des phyllosilicates du sous-groupe des "palygorskite-sépiolite" selon la classification de Dana sont mis en oeuvre en mélange. Ceci permet un gain d'investissement et d'espace à impact économique non négligeable puisque dès lors deux étapes peuvent être réalisées simultanément et au même endroit.

D'autres formes de réalisation du procédé sont indiquées dans les revendications annexées.

La présente invention se rapporte en outre à une utilisation de composé minéral non fonctionnalisé à l'état sec, choisi dans le groupe constitué de l'halloysite et des phyllosilicates du sous-groupe des "palygorskite-sépiolite" selon la classification de Dana, pour l'abattement des métaux lourds, en particulier du mercure, présents dans les gaz de fumées et à une utilisation d'un mélange d'absorbant basique et dudit composé minéral non fonctionnalisé choisi dans le groupe constitué de l'halloysite et des phyllosilicates du sous-groupe des "palygorskite-sépiolite" à l'état sec pour le traitement des gaz de fumées.

La présente invention a donc pour objet un procédé d'abattement des métaux lourds, en particulier de mercure, présents dans les gaz de fumées, au moyen d'un composé minéral choisi dans le groupe constitué de l'halloysite et des phyllosilicates du sous-groupe des "palygorskite-sépiolite". Les composés minéraux utilisés de préférence dans le procédé selon l'invention sont l'halloysite et parmi le groupe des phyllosilicates du sous-groupe des "palygorskite-sépiolite", la sépiolite et la palygorskite, aussi appelée attapulgite.

Ces composés minéraux sont envisagés tels quels (non fonctionnalisés par un composé, tel le soufre). Parmi les phyllosilicates, sont concernés par la présente invention ceux du sous-groupe "palygorskite-sépiolite", selon la classification de Dana. L'halloysite et les phyllosilicates visés par l'invention présentent une porosité élevée, typiquement un volume poreux compris entre 0,25 et 0,8 cm³/g, mesurés par la méthode BJH, en désorption d'azote. Cet intervalle de porosité vaut pour les pores de taille comprise entre 2 et 100 nanomètres.

De façon inattendue, on a pu mettre en évidence que ces composés minéraux du groupe constitué de l'halloysite et des phyllosilicates permettent d'abattre les métaux lourds, en particulier le mercure, présents dans les gaz de fumées.

Dans une réalisation préférentielle du procédé selon l'invention, le composé minéral est mis en contact avec le courant gazeux à traiter, soit tel quel, soit en mélange avec un absorbant basique tel que la chaux. De préférence, le composé minéral selon l'invention est utilisé sous forme pulvérulente, à savoir que la taille des particules est inférieure à 1 mm. Le composé minéral est alors injecté par voie pneumatique dans la veine gazeuse.

L'invention va maintenant être décrite plus en détail au moyen d'exemples non limitatifs.

### Exemple 1.-

On a utilisé de la sépiolite non fonctionalisée dans un incinérateur d'ordures ménagères, d'une capacité de 8 t/h de déchets, qui génère environ 50 000 Nm³/h de fumées à traiter. La sépiolite, dont 90% des particules étaient de taille inférieure à 600 µm, est dosée au moyen d'une vis et injectée pneumatiquement dans le courant gazeux à 150 °C, à raison de 12 kg/h, puis arrêtée dans un filtre à manches.

On a mesuré les teneurs en métaux lourds: mercure et (cadmium + thallium) dans les fumées, en aval de l'injection et du filtre. Les métaux lourds sont dosés par absorption atomique ou spectrométrie d'émission à plasma à couplage inductif:
- sur les particules solides véhiculées par le gaz, piégées sur un filtre puis minéralisées et
- sur les fractions volatiles, captées par barbotage dans une solution d'absorption spécifique ;
la teneur en métaux lourds étant la somme des valeurs mesurées sur les fractions particulaires et volatiles.

Les concentrations, normalisées sur gaz secs et à 11% d'oxygène sont respectivement de 50 µg/Nm³ pour le mercure et < 10 µg/Nm³ pour la somme des deux autres métaux lourds. Ces résultats sont conformes à la législation en vigueur. '

A titre de comparaison, une injection de 7 kg/h de charbon actif permet dans cette même installation de respecter habituellement les valeurs limites d'émissions en mercure et autres métaux lourds.

### Exemple 2.-

On a injecté la même sépiolite qu'à l'exemple 1 de façon analogue dans les fumées d'un autre incinérateur de déchets ménagers, à une température plus élevée soit 190°C. D'une capacité de 5 t/h, cet incinérateur génère un flux de fumées de 30 000 Nm³/h ; on y a dosé la sépiolite comme à l'exemple 1, à raison de 5,5 kg/h.

Les concentrations en mercure mesurées en amont et en aval de l'ajout de sépiolite, selon la méthode présentée à l'exemple 1, sont respectivement de 42 µg/Nm³ et 8 µg/Nm³, soit un taux d'abattement de mercure de 80%.

Il doit être entendu que la présente invention n'est en aucune façon limitée aux modes de réalisation décrits ci-dessus et que bien des modifications peuvent y être apportées sans sortir du cadre des revendications annexées.

## Revendications

1. Procédé d'abattement de métaux lourds, en particulier de mercure, présents dans les gaz de fumées comprenant une étape de mise en contact des gaz de fumées avec une matière solide de sorption à l'état sec, **caractérisé en ce que** la matière solide de sorption est un composé minéral non fonctionnalisé choisi dans le groupe constitué de l'halloysite et des phyllosilicates du sous-groupe des "palygorskite-sépiolite" selon la classification de Dana.

2. Procédé d'abattement de métaux lourds, en particulier de mercure présents dans les gaz de fumées selon la revendication 1, **caractérisé en ce que** ladite mise en contact, à l'état sec, est réalisée à une température comprise dans la plage allant de 70°C à 350°C.

3. Procédé d'abattement de métaux lourds, en particulier de mercure, présents dans les gaz de fumées selon l'une des revendications 1 ou 2, **caractérisé en ce qu'**il comprend, en outre, une étape d'élimination des polluants acides majoritaires par mise en contact desdits gaz de fumées avec des absorbants basiques.

4. Procédé d'abattement de métaux lourds, en particulier de mercure, présents dans les gaz de fumées selon l'une des revendications 1 à 3, **caractérisé en ce que** lesdits absorbants basiques et ledit composé minéral non fonctionnalisé choisi dans le groupe constitué de l'halloysite et des phyllosilicates du sous-groupe des "palygorskite-sépiolite" selon la classification de Dana sont mis en oeuvre en mélange.

5. Procédé d'abattement de métaux lourds, en particulier de mercure, présents dans les gaz de fumées selon l'une des revendications 1 à 4, **caractérisé en ce que** ledit composé minéral non fonctionnalisé choisi dans le groupe constitué de l'halloysite et des phyllosilicates du sous-groupe des "palygorskite-sépiolite" selon la classification de Dana présentent un volume poreux compris entre 0,25 et 0,8 cm³/g, mesurés par la méthode BJH, en désorption d'azote.

6. Procédé d'abattement de métaux lourds, en particulier de mercure, présents dans les gaz de fumées selon l'une des revendications 1 à 5, **caractérisé en ce que** ledit composé minéral non fonctionnalisé choisi dans le groupe constitué de l'halloysite et des phyllosilicates du sous-groupe des "palygorskite-sépiolite" est à l'état pulvérulent.

7. Procédé d'abattement de métaux lourds, en particulier de mercure, présents dans les gaz de fumées selon l'une des revendications 1 à 6, **caractérisé en ce que** ledit composé minéral non fonctionnalisé choisi dans le groupe constitué de l'halloysite et des phyllosilicates du sous-groupe des "palygorskite-sépiolite" est injecté par voie pneumatique dans une veine gazeuse.

8. Utilisation d'un composé minéral non fonctionnalisé à l'état sec, choisi dans le groupe constitué de l'halloysite et des phyllosilicates du sous-groupe des "palygorskite-sépiolite" selon la classification de Dana, pour l'abattement de métaux lourds, en particulier de mercure, présents dans les gaz de fumées.

9. Utilisation d'un mélange d'absorbant basique et de composé minéral non fonctionnalisé choisi dans le groupe constitué de l'halloysite et des phyllosilicates du sous-groupe des "palygorskite-sépiolite" à l'état sec pour le traitement des gaz de fumées.

## Claims

1. Method for reducing heavy metals, in particular mercury, present in flue gases comprising a stage of bringing flue gases into contact with a sorbent solid material in the dry state, **characterised in that** the sorbent solid material is a non-functionalised mineral compound selected from the group comprising halloysite and phyllosilicates of the sub-group "palygorskite-sepiolite" according to the Dana classification.

2. Method for reducing heavy metals, in particular mercury, present in flue gases according to claim 1, **characterised in that** said contacting in the dry state is performed at a temperature in the range from 70°C to 350°C.

3. Method for reducing heavy metals, in particular mercury, present in flue gases according to claim 1 or 2, **characterised in that** it also comprises a stage of eliminating the mostly acid pollutants by bringing said flue gases into contact with alkaline absorbents.

4. Method for reducing heavy metals, in particular mercury, present in flue gases according to any of claims 1 to 3, **characterised in that** said alkaline absorbents and said non-functionalised mineral compound selected from the group comprising halloysite and phyllosilicates of the sub-group "palygorskite-sepiolite" according to the Dana classification, are used in a mixture.

5. Method for reducing heavy metals, in particular mercury, present in flue gases according to any of claims 1 to 4, **characterised in that** said non-functionalised mineral compound selected from the group comprising halloysite and phyllosilicates of the sub-group "palygorskite-sepiolite" according to the Dana classification, have a porous volume between 0.25 and 0.8 cm³/g measured by the BJH method in nitrogen desorption.

6. Method for reducing heavy metals, in particular mercury, present in flue gases according to any of claims 1 to 5, **characterised in that** said non-functionalised mineral compound selected from the group comprising halloysite and phyllosilicates of the sub-group "palygorskite-sepiolite" is in the powder state.

7. Method for reducing heavy metals, in particular mercury, present in flue gases according to any of claims 1 to 6, **characterised in that** said non-functionalised mineral compound selected from the group comprising halloysite and phyllosilicates of the sub-group "palygorskite-sepiolite" is injected pneumatically into a gas flow.

8. Use of a non-functionalised mineral compound in the dry state selected from the group comprising halloysite and phyllosilicates of the sub-group "palygorskite-sepiolite" according to the Dana classification for reduction of heavy metals, in particular mercury, present in flue gases.

9. Use of an alkaline absorbent and a non-functionalised mineral compound selected from the group comprising halloysite and phyllosilicates of the sub-group "palygorskite-sepiolite" in the dry state for the treatment of flue gases.

## Patentansprüche

1. Verfahren zum Niederschlagen von Schwermetallen, insbesondere Quecksilber, die in den Rauchgasen vorhanden sind, umfassend einen Schritt der Herstellung eines Kontakts der Rauchgase mit einem Sorptionsfeststoff im trockenen Zustand, **dadurch gekennzeichnet, dass** der Sorptionsfeststoff eine nicht funktionalisierte mineralische Verbindung ist, die in der Gruppe ausgewählt wird, die von Halloysit und Phyllosilikaten der Untergruppe der "Palygorskite-Sepiolite" nach der Dana-Klassifikation gebildet ist.

2. Verfahren zum Niederschlagen von Schwermetallen, insbesondere Quecksilber, die in den Rauchgasen vorhanden sind, nach Anspruch 1, **dadurch gekennzeichnet, dass** die Herstellung des Kontakts im trockenen Zustand bei einer Temperatur im Bereich von 70 °C bis 350 °C erfolgt.

3. Verfahren zum Niederschlagen von Schwermetallen, insbesondere Quecksilber, die in den Rauchgasen vorhanden sind, nach einem der Ansprüche 1 oder 2, **dadurch gekennzeichnet, dass** es ferner einen Schritt der Beseitigung der mehrheitlich vorhandenen sauren Schadstoffe durch Herstellung eins Kontakts der Rauchgase mit basischen Absorbenzien.

4. Verfahren zum Niederschlagen von Schwermetallen, insbesondere Quecksilber, die in den Rauchgasen vorhanden sind, nach einem der Ansprüche 1 bis 3, **dadurch gekennzeichnet, dass** die basischen Absorbenzien und die nicht funktionalisierte mineralische Verbindung, die in der Gruppe ausgewählt wird, die von Halloysite und den Phyllosilikaten der Untergruppe der "Palygorskite-Sepiolite" nach der Dana-Klassifikation gebildet ist, im Gemisch eingesetzt werden.

5. Verfahren zum Niederschlagen von Schwermetallen, insbesondere Quecksilber, die in den Rauchgasen vorhanden sind, nach einem der Ansprüche 1 bis 4, **dadurch gekennzeichnet, dass** die nicht funktionalisierte mineralische Verbindung, die in der Gruppe ausgewählt wird, die von Halloysite und den Phyllosilikaten der Untergruppe der "Palygorskite-Sepiolite" nach der Dana-Klassifikation gebildet ist, ein poröses Volumen zwischen 0,25 und 0,8 cm³/g, gemessen durch die BJH-Methode bei der Stickstoffdesorption aufweist.

6. Verfahren zum Niederschlagen von Schwermetallen, insbesondere Quecksilber, die in den Rauchgasen vorhanden sind, nach einem der Ansprüche 1 bis 5, **dadurch gekennzeichnet, dass** die nicht funktionalisierte mineralische Verbindung, die in der Gruppe ausgewählt wird, die von Halloysite und den Phyllosilikaten der Untergruppe der "Palygorskite-Sepiolite" gebildet ist, im pulverförmigen Zustand ist.

7. Verfahren zum Niederschlagen von Schwermetallen, insbesondere Quecksilber, die in den Rauchgasen vorhanden sind, nach einem der Ansprüche 1 bis 6, **dadurch gekennzeichnet, dass** die nicht funktionalisierte mineralische Verbindung, die in der Gruppe ausgewählt wird, die von Halloysite und den Phyllosilikaten der Untergruppe der "Palygorskite-Sepiolite" gebildet ist, auf pneumatischem Weg in eine Gasleitung eingespritzt wird.

8. Verwendung einer nicht funktionalisierten mineralischen Verbindung, die in der Gruppe ausgewählt wird, die von Halloysite und den Phyllosilikaten der Untergruppe der "Palygorskite-Sepiolite" nach der Dana-Klassifikation gebildet ist, zum Niederschlagen von Schwermetallen, insbesondere Quecksilber, die in den Rauchgasen vorhanden sind.

9. Verwendung eines basischen Absorbensgemisches und einer nicht funktionalisierten mineralischen Verbindung, die in der Gruppe ausgewählt wird, die von Halloysite und den Phyllosilikaten der Untergruppe der "Palygorskite-Sepiolite" gebildet ist, im trockenen Zustand für die Behandlung der Rauchgase.
